# EUROPÄISCHE PATENTSCHRIFT

(11) **EP 0 898 012 B1**
(45) Veröffentlichungstag und Bekanntmachung des Hinweises auf die Patenterteilung: **19.03.2003**
(21) Anmeldenummer: 98107891.8
(22) Anmeldetag: 30.04.1998
(51) Int. Cl.: D21B 1/30, D21B 1/32, D21D 5/02

(54) **Verfahren und Vorrichtung zum Auflösen von Faserstoffen**
Process and aparatus for the pulping of fibrous products
Procédé et appareil pour la décomposition de produits fibreux

(30) Priorität: 20.08.1997 DE 19736143
(43) Veröffentlichungstag der Anmeldung: 24.02.1999
(73) Patentinhaber: Voith Paper Patent GmbH, 89522 Heidenheim (DE)
(72) Erfinder: Krebs, Jochen, 88213 Ravensburg (DE); Steidele, Andreas, 88213 Ravensburg (DE); Müller, Wolfgang, 88250 Weingarten (DE); Steinbild, Klaus, 88212 Ravensburg (DE)

(56) Entgegenhaltungen:
- EP-A- 0 062 988
- EP-A- 0 218 738
- WO-A-82/01326

## Beschreibung

Die Erfindung bezieht sich auf eine Vorrichtung gemäß dem Oberbegriff des Anspruchs 1.

Mit Hilfe einer solchen Vorrichtung soll in vielen Fällen verschmutztes Altpapier mit Wasser vermischt und zerkleinert werden. Die dazu benutzte Auflösetrommel besteht im Wesentlichen aus einem liegenden Zylinder, der zumeist an seinen Stirnflächen ringförmige Abdeckbleche enthält, um unerwünschtes Austreten des Stoffes zu verhindern. In ihr wird das mit Wasser versetzte Altpapier durch Anheben, Rutschen und Fallen, bzw. Relativbewegungen der Stoffanteile zueinander, zerkleinert. Bei Vorhandensein von Sortieröffnungen im Trommelmantel kann der aufgelöste Faserstoff dadurch austreten. Ausführungsformen solcher Auflösetrommeln sind z.B. in der DE-PS 32 10 503 gezeigt und beschrieben.

Die Behandlung von Altpapier, die mit solchen oder ähnlichen Auflösetrommeln arbeitet, hat bekanntlich den Vorteil einer besonders schonenden Auflösung, sowohl was empfindliche Fasersorten als auch sortierbar zu erhaltende unerwünschte Begleitstoffe betrifft. Das erkauft man jedoch durch den Nachteil, dass sie am günstigsten nur für solche Altpapiersorten eingesetzt werden sollten, deren Auflösbarkeit besonders leicht ist, was bedeutet, dass sie möglichst keine Anteile schwer auflösbarer Papiersorten enthalten dürfen. Die Begriffe schwer und leicht auflösbar sind dem Fachmann durchaus geläufig, wobei z.B. Zeitungspapier leicht auflösbar und "teilnassfeste", oberflächenbehandelte und "nassfeste" Papiersorten schwer auflösbar sind. Man kann auch von hoher bzw. geringer Auflösbarkeit sprechen. Als Maß für die Auflösbarkeit kann z.B. die spezifische Arbeit angegeben werden, die während des Auflösevorganges im Stofflöser zur Erzeugung einer pumpfähigen Suspension benötigt wird. Sie beträgt z.B. bei Zeitungspapier ca 15 - 20 kWh/t und bei Liner oder oberflächenbehandelten Papieren bis zu 80 kWh/t. Aus den genannten Gründen haben sich Auflösetrommeln besonders bei sogenanntem Deinkingstoff bewährt, also bedruckten sortierten Altpapiersorten, die - wie schon erwähnt - in der Regel leicht auflösbar sind. Aber auch bei dieser Anwendung haben die Auflösetrommeln beträchtliche Ausmaße.

In der EP 0 062 988 A wird eine rotierbare, geneigt angeordnete Auflösetrommel gezeigt, welche sowohl einen Auflöseteil als auch einen Sortierteil enthält. In dieser Trommel befindet sich ein Rollkörper, der sich im Bodenbereich der Trommel auf dem eingetragenen, aufzulösenden Stoff abwälzt. Sowohl der Rollkörper als auch die Trommelinnenwand sind mit vorstehenden Abrasionsleisten versehen. Der Stoff wird in einem Spalt ("nip") gepreßt und kompaktiert. Alternativ wird auch der positive Antrieb des Rollkörpers erwähnt. Dann erfolgt infolge der Relativgeschwindigkeit eine schneidende Mahlbehandlung. Zur schonenden Auflösung ist diese Trommel nicht optimal geeignet, da sowohl Faserschädigungen als auch die Zerkleinerung von eventuell enthaltenen Störstoffen zu erwarten sind.

Aus der WO 82 01 326 A ist eine Reibmühle mit zwei ineinander liegenden, gegensinnig umlaufenden Zylindern bekannt. Diese bilden einen Reibspalt, in dem voluminöses, mit Dampf vermischtes Material zerkleinert werden soll. Als Anwendung ist die Mahlung ("refining") von Holzstoff angegeben. Für die Auflösung von Faserstoff, also der Suspendierung in Wasser ist diese Reibmühle kaum oder nur bedingt geeignet.

Der Erfindung liegt die Aufgabe zu Grunde, eine Vorrichtung der angegebenen Gattung zu schaffen, die robust und kompakt ist und einen guten Auflöseeffekt erbringt. Es sollen sowohl leicht auflösbare als auch gemischte Sorten, eventuell grobverschmutztes Altpapier, problemlos verarbeitet werden können.

Diese Aufgabe wird durch die im Kennzeichen des Anspruchs 1 genannten Maßnahmen erfüllt.

In den Unteransprüchen sind vorteilhafte Ausgestaltungen beschrieben.

Durch die Erfindung ist es möglich, den Raum innerhalb der Trommel sehr viel besser zu nutzen. Im Bearbeitungskanal wird der Stoff nämlich besonders wirksam aufgelöst, ohne dass die Kräfte ein unzulässiges Maß überschreiten können. Dabei kann z.B. die hohe Zähigkeit des hochkonsistenten Papierfaserstoffes zur Auflösung durch Scherkräfte im Bearbeitungskanal mit herangezogen werden. Die Relativgeschwindigkeit zwischen Trommel und Verdrängungskörper muß mindestens 10 cm/sec betragen, vorzugsweise 0,5 bis 2 m/sec. Die ganze Apparatur wird leistungsfähiger und damit kompakter. Ist in speziellen Ausführungsformen der Verdrängungskörper perforiert, so dass er auch der Sortierung des Trommelinhaltes dient, ermöglicht das eine weitere Reduzierung der erforderlichen Trommellänge.

Die Erfindung wird erläutert an Hand von Zeichnungen; dabei zeigen:
- Fig. 1: eine erfindungsgemäße Trommel mit Blick auf eine Stirnseite;
- Fig. 2: eine ähnliche Trommel wie in Fig.1 in Seitenansicht;
- Fig.3+4: weitere Trommel-Varianten in Seitenansicht;
- Fig. 5: eine Trommel-Variante mit Ballenfräser in Seitenansicht;
- Fig. 6: die Trommel gemäß Fig. 5 mit Blick auf eine Stirnseite;
- Fig. 7: eine weitere Trommel-Variante;
- Fig. 8: eine ähnliche Trommel wie in Fig.7 in Seitenansicht;
- Fig. 9 und 10: je eine Anlage als Beispiel der speziellen vorteilhaften Verwendung der erfindungsgemäßen Vorrichtung.

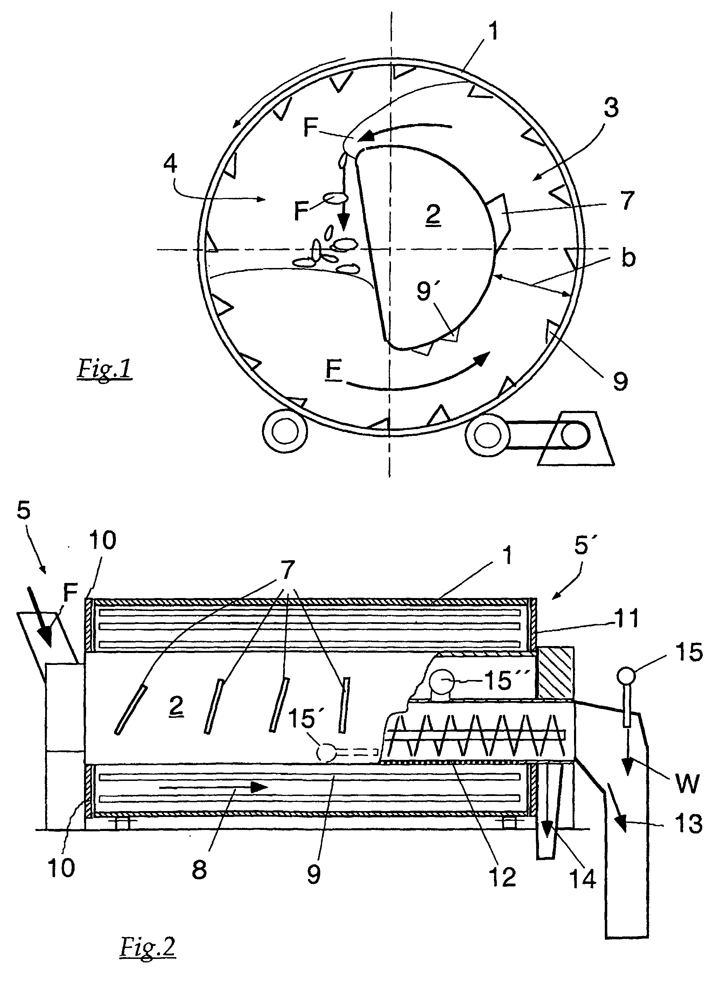

Figur 1 zeigt in schematischer Darstellung eine erfindungsgemäße Auflösevorrichtung. Sie enthält eine mit Blick auf die Stirnseite gezeichnete Trommel 1, welche hier etwa horizontal angeordnet und drehbar gelagert ist. Die Innenwand der Trommel 1 ist mit einer Anzahl von Mitnehmerleisten 9 versehen. Der Faserstoff F, der in die Trommel 1 eingetragen wurde, sammelt sich im unteren Bereich und wird durch deren Bewegung von den Mitnehmerleisten 9 angehoben. Im Zentrum der Trommel 1 befindet sich ein stillstehender Verdrängungskörper 2. Dabei bildet sich zwischen der Außenwand des Verdrängungskörpers 2 und der Innenwand der Trommel 1 ein Bearbeitungskanal 3. Dieser liegt auf der Seite, wo der Faserstoff F angehoben wird, bei dieser Darstellung auf der rechten. Der Bearbeitungskanal 3 hat die radiale Erstreckung b, welcher durch den Abstand zwischen Außenwand und Verdrängungskörper 2 und Innenwand der Trommel 1 definiert ist. Der Faserstoff F schiebt sich nach oben und fällt nach Passieren des oberen Kulminationspunktes in der Fallstrecke 4 wieder herab. Bekanntlich ist aufgrund einer solchen Fallbewegung zumindest die Grobzerkleinerung von nassem Papier möglich. Die Zerkleinerungswirkung kann beim erfindungsgemäßen Verfahren durch die Scherkräfte, die im Bearbeitungskanal 3 herrschen, erzielt oder wesentlich verstärkt werden. Zusätzlich können am Verdrängungskörper Brems- oder Zerreißstücke 9' angebracht sein, welche die Bewegung innerhalb des Faserstoffs und die Bearbeitungsintensität weiter erhöhen. Es ist von Vorteil, die Abstände der Bearbeitungsorgane im Bearbeitungskanal 3 so groß zu wählen, dass eine Beschädigung durch grobe Verunreinigungen oder deren unerwünschte Zerkleinerung nicht erfolgen kann.

Soll die Trommel kontinuierlich betrieben werden, so ist es erforderlich, dass eine ständige axiale Transportbewegung 8 (Fig. 2) durch die Trommel stattfindet. Hierzu kann bekanntlich die Trommel schräg gestellt, das heisst also nicht waagerecht angeordnet sein. Eine andere Möglichkeit ist die Einspeisung durch eine Pfropfschnecke. Oder es befinden sich in der Trommelwand Transportorgane, z.B. schräggestellte Schaufeln. Bei der hier gezeigten Lösung wird die Transportbewegung durch auf dem Verdrängungskörper 2 angebrachte Leitelemente 7 gesteuert. Die Wirkung dieser Leitelemente 7 beruht darauf, dass zwischen ihnen und dem Faserstoff F eine Relativbewegung in Umfangsrichtung stattfindet. Durch entsprechendes Schrägstellen läßt sich dann der Axialfluss steuern. Dabei wird es in der Regel von Vorteil sein, die Stellung der Leitelemente 7 entweder im Stillstand oder auch - wenigstens bei einem Teil von ihnen - bei Betrieb der Auflösevorrichtung verändern zu können. Der Verstellmechanismus kann am Verdrängungskörper 2 installiert sein, was besonders vorteilhaft ist, wenn dieser stillsteht.

Die Figur 2 zeigt eine ähnliche Apparatur wie die der Figur 1 in Längsansicht. Dabei ist die Trommel 1 geschnitten gezeichnet, um den Verdrängungskörper 2 sichtbar zu machen. An den Stirnflächen ist die Trommel durch nicht mitrotierende, gegen die Trommel abgedichtete Scheiben 10 und 11 im Wesentlichen verschlossen. Der Faserstoff F wird seitlich von der ersten Stirnseite 5 durch eine, hier nicht sichtbare, große Öffnung in der Scheibe 10 eingeführt und entsprechend der axialen Transportbewegung 8 durch die Trommel hindurchgeleitet. Man erkennt auch eine Kombination von Auflösung und Sortierung in derselben Trommel 1. In dem hier gezeigten Beispiel enthält der Verdrängungskörper 2 dazu in seinem stromabwärtigen Teil ein Siebelement 12, durch das eine feinere Fraktion 13, insbesondere Faserstoff, in einen Gutstoffraum im Inneren des Verdrängungskörpers 2 passieren kann und aus diesem an einer oder beiden Seiten axial abgeführt wird. Dabei kann Unterdruck an den Gutstoffraum angelegt werden. Wenn gewünscht, ist es auch möglich, mehrere Feinfraktionen durch entsprechend unterschiedliche Siebelemente aus dem Inneren der Trommel zu gewinnen. An der zweiten Stirnseite 5' der Trommel bleibt dann nur noch die gröbste Fraktion 14 zurück und kann aus der Trommel herausgefördert werden. Die Perforation im Verdrängungskörper 2 kann auch schon im Einlaufbereich, also nahe der ersten Stirnseite 5 beginnen.

An verschiedenen Stellen dieser Auflösevorrichtung kann Wasser W, z. B. durch Wasserspritzrohre 15 zugegeben werden. Dieses Wasser dient zum einen zur gesamthaften Verdünnung des Faserstoffes, damit dieser besser gepumpt werden kann und/oder zum anderen der lokalen Verdünnung, z. B. im Bereich der Siebflächen. Der letztgenannte Fall wird hier mit einem innerhalb des Verdrängungskörpers 2 gestrichelt eingezeichneten Spritzrohr 15' angedeutet, das auf den Einlaufbereich zum Siebelement 12 gerichtet ist. Wasser kann auch durch Gegenspülen zum Freimachen oder Freihalten der Siebelemente verwandt werden; das ist kontinuierlich möglich oder es kann in Zeitabständen ein Druckstoß, z.B. mit Hilfe des Wasserrohres 15" erzeugt werden, der den ganzen Gutstoffraum erfasst.

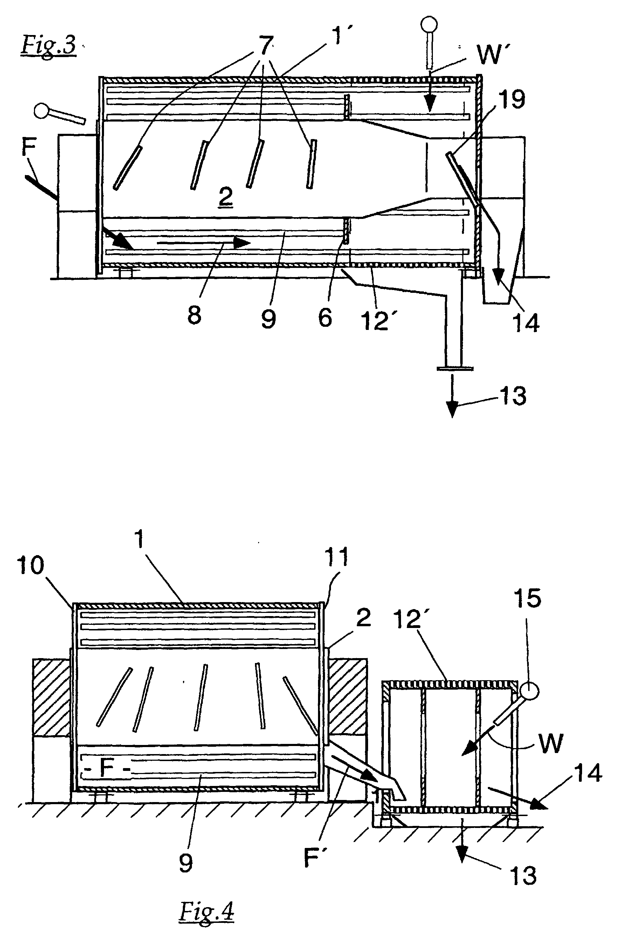

Während in Figur 2 die feinere Fraktion 13 durch den Verdrängungskörper 2 abgeleitet wird, kann das, wie die Figur 3 zeigt, auch an der Trommelwand erfolgen, indem nämlich diese mit Siebelementen 12' versehen ist. Auch hier kann wieder je nach Bedarf Spül- oder Verdünnungswasser W zugesetzt werden. Die gröbste Fraktion 14 wird in der Trommel bis zum Ende des Sortierbereiches zurückgehalten und dann durch eine Schmutz-Austragsvorrichtung 19 aus der Trommel entfernt.

Weiterhin zeigt die Fig. 3 eine vorteilhafte Maßnahme zur Steuerung der axialen Transportbewegung: Auf dem Verdrängungskörper 2 befindet sich mindestens ein Stauring 6, der ein zu schnelles Weiterfließen, z.B. von noch nicht genügend Aufgelöstem verhindern kann. Da er nicht mitrotiert, kann sein Abstand zur Innenwand der Trommel an verschiedenen Stellen des Umfangs verschieden sein, z. B. unten kleiner als oben. Ein solcher Stauring ist auch bei den anderen Ausführungen sinnvoll. Das gleiche gilt für an sich schon bekannte in der Trommel befestigte, also mitrotierende Stauringe.

Ein weiteres Beispiel für eine erfindungsgemäße Auflösevorrichtung zeigt Figur 4. Bei dieser erfüllt die Trommel 1 jedoch nur die reine Auflösefunktion, wodurch sie beträchtlich kürzer wird, was Platz spart und, z. B. bei gering verschmutztem Altpapier von Vorteil sein kann. Bei diesem Beispiel wird der aufgelöste, noch verschmutzte Faserstoff F' in eine nachgeschaltete Sortiertrommel eingeführt, in der Unrat und Papierfasern voneinander geschieden werden.

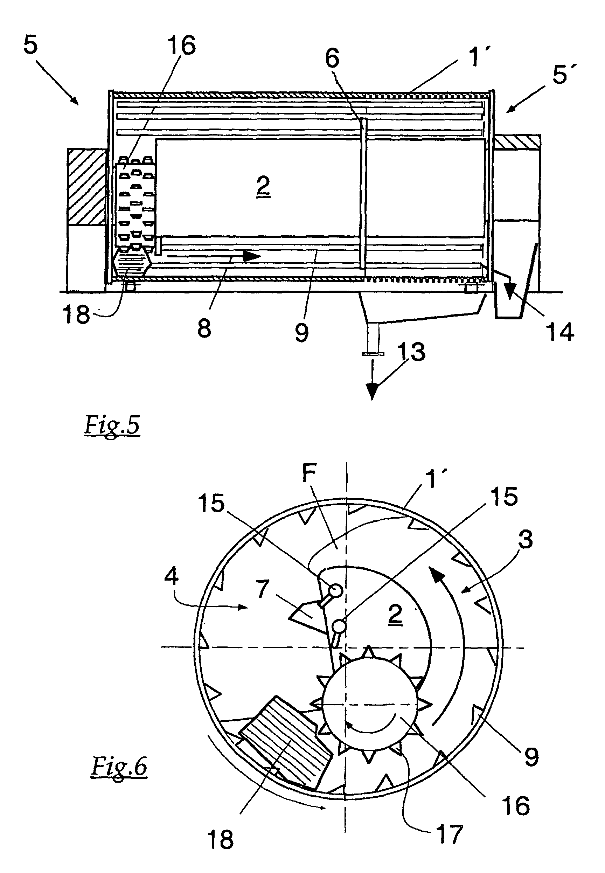

Oft wird der Papierfaserstoff, der durch eine Vorrichtung dieser Art bearbeitet werden soll, in Form gepresster Ballen angeliefert. Dabei hat es sich gezeigt, dass, auch wenn die Ballendrähte bereits entfernt sind, ein solcher Ballen infolge der Pressung nicht ohne weiteres zerfällt, sondern dass komplette Ballen oder grober Ballenbruch in die Trommel gelangen. Um einen vorgeschalteten Zerkleinerungsapparat, z.B. einen Shredder einzusparen, kann gemäß Fig. 5 an der ersten Stirnseite 5 der Trommel unmittelbar hinter der Einfüllöffnung ein Ballenfräser 16 vorhanden sein. Beispielsweise besteht ein solcher Ballenfräser aus einer liegendem Trommel, die an ihrer Außenfläche mit einer Vielzahl von Zerkleinerungselementen 17 versehen ist. Wird diese Trommel so angetrieben, dass sie sich relativ zum eingeführten Papierballen 18 bewegt, so lässt sich sehr einfach der bereits eingetauchte und somit gequollene Papierballen/ bzw. Papierballenbruch in Fetzen oder Bahnen aufspalten. Die in Figur 6 gezeigte Anordnung des Ballenfräsers 16 verhindert, dass Ballenteile, die noch nicht genügend zerkleinert sind, in den Bearbeitungskanal 3 gelangen können. Mit der Kombination Ballenfräser und Auflösetrommel können Ballen sehr vorteilhaft bearbeitet werden. Weiterhin zeigt die Figur 6, dass die Leitelemente 7 nicht nur im Bearbeitungskanal 3 sondern auch auf der Gegenseite, d. h. im Bereich der Fallstrecke für den Faserstoff F angebracht sein können. Die hier gezeigte Anordnung hat insbesondere den Vorteil, dass die Leitelemente nicht im hoch beanspruchten Bearbeitungskanal sind, in dem sie zumeist besonderem Verschleiß ausgesetzt wären.

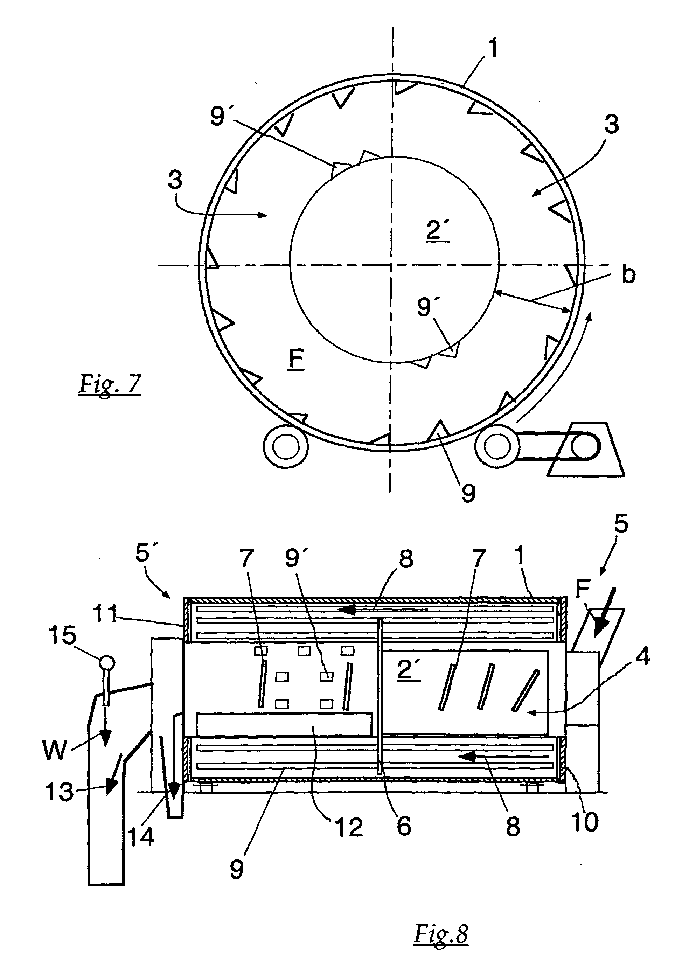

Die Variante gemäß Fig. 7 enthält einen Verdrängungskörper 2', bei dem nicht zwangsläufig eine Fallstrecke entsteht. Er hat nämlich zumindest auf einem Teil seiner Axialerstreckung eine runde oder wenigstens konvexe Außenwand, so dass der Bearbeitungskanal 3 über den ganzen Umfang verläuft.

Die Figur 8 zeigt eine ähnliche Apparatur wie die der Figur 7 in Seitenansicht, und zwar im Gegensatz zu den Figuren 2 bis 5 mit Blick in den Bereich der Abwärtsbewegung des Faserstoffes. Hier ist die Fallstrecke 4 nur auf einem Teil der Axialerstreckung vorhanden. Das führt zu einer Kombination von initialer Fallzerkleinerung und anschließender intensivierter Auflösung im sich über den ganzen Umfang erstreckenden Bearbeitungskanal 3. Diese Lösung lässt sich durch den in den Figuren 5 und 6 gezeigten Ballenfräser, der axial vor oder zu Beginn der Fallstrecke 4 vorzusehen wäre, weiter verbessern.

In den Figuren 1 bis 8 sind lediglich Beispiele gezeigt, um die erfindungsgemäße Vorrichtung zu erläutern. Insbesondere, was die Form des Verdrängungkörpers und des Ballenfräsers sowie die Ausgestaltung der Innenwand der Trommel betrifft, sind weitere hier nicht ausdrücklich erwähnte Varianten der Erfindung ohne weiteres denkbar.

So wird im Allgemeinen die horizontale oder leicht schräge Anordnung der Trommel am zweckmäßigsten sein. Eine solche Ausgestaltung ermöglicht die Fallzerkleinerung des Faserstoffes, die in vielen Fällen von Vorteil ist.

Wie bereits erwähnt, kann die Auflösung des Faserstoffes gemeinsam mit der Aussortierung von unerwünschten Bestandteilen in der Trommel erfolgen. Eine andere Möglichkeit besteht darin, die Sortierfunktion teilweise oder vollständig aus dem Bereich der Trommel herauszunehmen und in nachgeschalteten Vorrichtungen durchzuführen. Ein Beispiel hierzu ist bereits in der Fig. 4 dargestellt und in der zugehörigen Beschreibung erläutert worden.

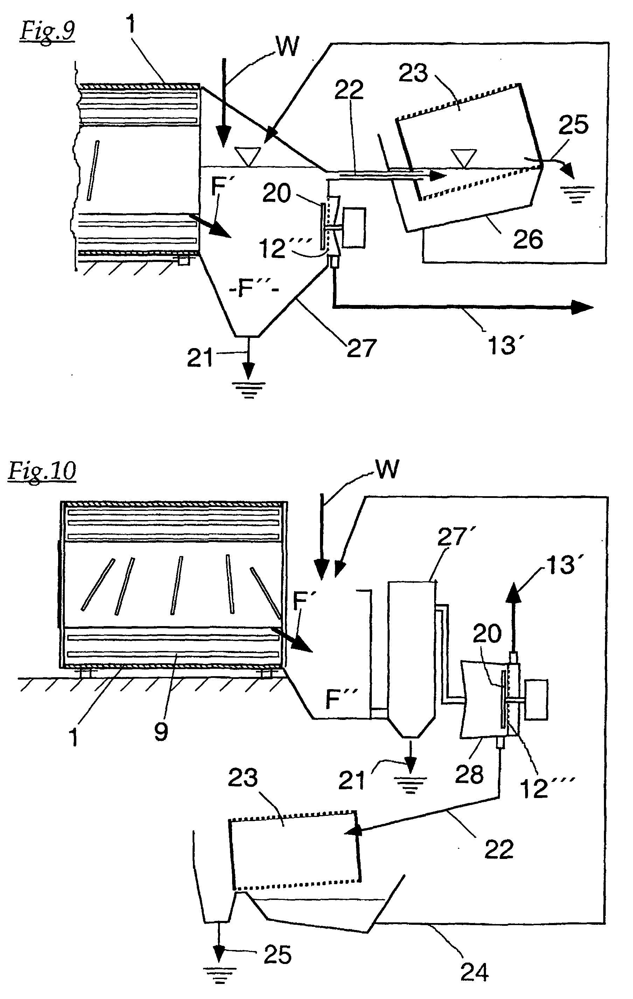

Eine günstige Verwendung der erfindungsgemäßen Trommel zeigt die Fig. 9. Bei dieser fällt der aufgelöste Faserstoff F' seitlich aus der Trommel 1 heraus in einen Behälter 27, in dem er mit Hilfe von Wasser W und eventuell weiteren Flüssigkeiten verdünnt wird, z.B. auf einen Feststoffgehalt zwischen 1 und 6 %, vorzugsweise ca. 5 %. Der Behälter 27, in dem sich also der verdünnte Faserstoff F" befindet, weist an seiner Seite ein Sieb 12"' auf, welches durch einen bewegten Siebräumer 20 frei gehalten wird. Das Sieb 12'' könnte auch an einer anderen Stelle, z.B. oben im Behälter 27 angebracht sein. Der Gutstoff 13', der dieses Sieb passiert, ist im Allgemeinen gut aufgelöst und von einem großen Teil der Verunreinigungen befreit. Das vom Sieb 12"' Abgewiesene 22 gelangt in eine Sortiertrommel 23. In ihr kann z. B. mit Hilfe von hier nicht gezeigtem zugegebenem Wasser eine Trennung zwischen Faser- und Schmutzstoffen erfolgen, wobei der Durchlauf 24, der also die Öffnungen in der Sortiertrommel 23 passieren konnte, mit Vorteil zur Verdünnung des aufgelösten Faserstoffes F herangezogen werden kann. Die Schmutzstoffe 25, z.B. Plastikfolien und Kleberücken werden stirnseitig aus dem Inneren der Sortiertrommel 23 ausgetragen. Selbstverständlich ist auch eine andere Verwertung dieses Durchlaufs 24 denkbar. Schwerteile 21 können im Behälter 27 absinken und unten entfernt werden. Dabei ist die Fluidisierungswirkung des Siebräumers 20 von Vorteil.

Das derart ausgestaltete Verfahren bietet besondere Vorteile, da mit Hilfe der erfindungsgemäßen Trommel 1 eine schonende und energiesparende Auflösung erzielbar sowie ein kontinuierlicher Austrag aus der Trommel 1 möglich ist. Außerdem erfolgt eine wirksame und schonende Sortierung. Der Behälter 27 dient auch als Pufferbehälter. Die Trommel 1 kann wegen des Fehlens einer Sortierstrecke relativ kurz sein.

Die Fig. 10 zeigt eine Variante, bei der ebenfalls die Aussortierung der Schmutzstoffe außerhalb der Trommel 1 erfolgt. Bei dieser Ausführungsform werden die Funktionen Schwerteilabscheidung und Sortierung in speziellen Apparaturen durchgeführt. Zur Abscheidung der Schwerteile 21 wird ein separater Absetzbehälter 27' verwendet, bei dem die Suspension in eine definierte Aufwärtsströmung versetzt wird, welche so gering ist, daß ein Absinken der auszuscheidenden Schwerteile möglich ist. Die nachfolgende Sortierung mit einem Sieb 12"', welches von einem bewegten Siebräumer 20 geräumt wird, findet in einem geschlossenen Gehäuse 28 statt. Das Abgewiesene 22 kann wiederum in einer Sortiertrommel 23 nachsortiert werden.

## Patentansprüche

1. Vorrichtung zum Auflösen von Faserstoff (F)
- mit einer liegend angeordneten Trommel (1, 1'),
- mit einem Antrieb zum Rotieren der Trommel (1, 1'),
- mit einem innerhalb der Trommel (1, 1') angeordneten, zumindest abschnittsweise gewölbten Verdrängungskörper (2, 2'),
- mit einer Zugabeeinrichtung für den Faserstoff (F) an einer ersten Stirnseite (5) der Trommel (1, 1'),
- mit einer Entnahmeeinrichtung für den aufgelösten Faserstoff (F'),
**dadurch gekennzeichnet,**
**dass** der Verdrängungskörper (2, 2') nicht rotiert und sich im zentralen Bereich der Trommel (1,1') befindet und
**dass** der Verdrängungskörper (2, 2') mit einer Außenwand Aversehen ist, die im Bereich einer Steigbewegung einer Innenwand der rotierenden Trommel (1, 1') auf mindestens einem Viertel ihres Umfanges gewölbt ist, wodurch sich zwischen dieser nicht rotierenden gewölbten Fläche der Außenwand des Verdrängungskörpers und der Innenwand der Trommel (1,1') ein Bearbeitungskanal (3) für den Faserstoff (F) bildet.

2. Vorrichtung nach Anspruch 1,
**dadurch gekennzeichnet,**
**dass** die Trommel (1,1') eine Entnahmeeinrichtung für faserfremde Stoffe hat.

3. Vorrichtung nach Anspruch 1 oder 2,
**dadurch gekennzeichnet,**
**dass** die Außenwand des Verdrängungskörpers (2, 2') zumindest auf einem Teil ihrer axialen Erstreckung im Bereich einer Senkbewegung der Innenwand der rotierenden Trommel (1,1') nach unten hin steil abfällt, so dass eine sich an den Bearbeitungskanal (3) anschließende Fallstrecke (4) entsteht.

4. Vorrichtung nach Anspruch 1, 2 oder 3,
**dadurch gekennzeichnet,**
**dass** an der Außenwand des Verdrängungskörpers (2, 2') Leitelemente (7) angebracht sind, die schräg gegen eine Umfangsrichtung der Trommel (1,1') gestellt sind.

5. Vorrichtung nach Anspruch 4,
**dadurch gekennzeichnet,**
**dass** zumindest ein Teil der Leitelemente (7) im Bereich des Bearbeitungskanals (3) angebracht ist.

6. Vorrichtung nach Anspruch 4 oder 5,
**dadurch gekennzeichnet,**
**dass** zumindest ein Teil der Leitelemente (7) im Bereich der Senkbewegung der Innenwand der Trommel (1,1') angebracht ist.

7. Vorrichtung nach einem der Ansprüche 1 bis 6,
**dadurch gekennzeichnet,**
**dass** die Wand der Trommel (1,1') zumindest auf einem Teil ihrer Axialerstreckung wasserundurchlässig ist.

8. Vorrichtung nach einem der Ansprüche 1 bis 7,
**dadurch gekennzeichnet,**
**dass** die Trommel (1') an ihrem Umfang mit mindestens einem Siebelement (12') versehen ist.

9. Vorrichtung nach einem der Ansprüche 1 bis 8,
**dadurch gekennzeichnet,**
**dass** die Trommel (1') an einer eine zweite Stirnseite (5') abschließenden Scheibe (11) mit mindestens einem Siebelement (12") versehen ist.

10. Vorrichtung nach einem der Ansprüche 1 bis 9,
**dadurch gekennzeichnet,**
**dass** die Wand des Verdrängungskörpers (2) mit mindestens einem Siebelement (12) versehen ist.

## Claims

1. Apparatus for pulping fibrous material (F)
- with a drum (1, 1') positioned horizontally
- with a drive unit for rotating the drum (1, 1')
- with a displacer (2, 2') which is positioned inside the drum and is curved at least in part
- with a feed device for the fibrous material (F) on a first end face (5) of the drum (1, 1')
- with a removal device for the pulped fibrous material (F'),
**characterised in that**
the displacer (2, 2') does not rotate, and is located in the central area of the drum (1,1'), and
the displacer (2, 2') has an outer wall that is curved, over at least one quarter of its circumference, in the area of an ascending movement of an inner wall of the rotating drum (1, 1'), by which means a processing channel (3) for the fibrous material (F) is formed between this non-rotating curved surface of the outer wall of the displacer and the inner wall of the drum (1, 1').

2. Apparatus as in Claim 1,
**characterised in that**
the drum (1, 1') has a removal device for non-fibrous materials.

3. Apparatus as in Claim 1 or 2,
**characterised in that**
the outer wall of the displacer (2, 2') slopes steeply downwards over at least part of its axial extent in the area of a downwards movement of the inner wall of the rotating drum (1, 1'), with the result that a drop section (4) is created following on from the processing channel (3).

4. Apparatus as in Claim 1, 2 or 3,
**characterised in that**
guide elements (7) are affixed to the outer wall of the displacer (2, 2') and set at an angle to the circumferential direction of the drum (1, 1').

5. Apparatus as in Claim 4,
**characterised in that**
at least some of the guide elements (7) are affixed in the area of the processing channel (3).

6. Apparatus as in Claim 4 or 5,
**characterised in that**
at least some of the guide elements (7) are affixed in the area of the downwards movement of the inner wall of the drum (1, 1').

7. Apparatus as in one of Claims 1 to 6,
**characterised in that**
the wall of the drum (1,1') is impermeable to water over at least a part of its axial extent.

8. Apparatus as in one of Claims 1 to 7,
**characterised in that**
the drum (1') has at least one filter screen element (12') on its circumference.

9. Apparatus as in one of Claims 1 to 8,
**characterised in that**
the drum (1') has at least one filter screen element (12") on a plate (11) that doses off a second end face (5').

10. Apparatus as in one of Claims 1 to 9,
**characterised in that**
the wall of the displacer (2) has at least one filter screen element (12).

## Revendications

1. Dispositif pour dissoudre une matière fibreuse (F) comportant :
- un tambour (1,1') disposé horizontalement,
- un dispositif d'entraînement pour la mise en rotation du tambour (1, 1'),
- un corps de refoulement (2, 2') courbé au moins par endroits, disposé à l'intérieur du tambour (1, 1'),
- un dispositif d'addition de la matière fibreuses (F) sur un premier côté d'extrémité (5) du tambour (1, 1'),
- un dispositif de prélèvement de là matière fibreuse (F') dissoute,
**caractérisé**
**en ce que** le corps de refoulement (2, 2') ne tourne pas et se trouve dans la zone centrale du tambour (1,1') et
**en ce que** le corps de refoulement (2, 2') est pourvu d'une paroi extérieure qui est cintrée sur au moins un quart de sa périphérie, dans la zone d'un mouvement ascendant d'une paroi intérieure du tambour (1, 1') tournant, ce qui fait qu'entre cette surface cintrée non tournante de la paroi extérieure du corps de refoulement et la paroi intérieure du tambour (1, 1') se forme un canal de traitement (3) pour la matière fibreuse (F).

2. Dispositif selon la revendication 1, **caractérisé en ce que** le tambour (1, 1') comporte un dispositif de prélèvement des matières autres que les fibres.

3. Dispositif selon la revendication 1 ou 2, **caractérisé en ce que** la paroi extérieure du corps de refoulement (2, 2') descend abruptement vers le bas au moins sur une partie de son étendue axiale, dans la zone d'un mouvement descendant de la paroi intérieure du tambour (1, 1') tournant, de sorte qu'il se forme un parcours de chute (4) à la suite du canal de traitement (3).

4. Dispositif selon la revendication 1, 2 ou 3, **caractérisé en ce que** sur la paroi extérieure du corps de refoulement (2, 2') sont placés des éléments de guidage (7) qui sont inclinés obliquement vcrs une direction périphérique du tambour (1, 1').

5. Dispositif selon la revendication 4, **caractérisé en ce qu'**au moins une partie des éléments de guidage (7) est placée dans la zone du canal de traitement (3).

6. Dispositif selon la revendication 4 ou 5, **caractérisé en ce qu'**au moins une partie des éléments de guidage (7) est placée dans la zone du mouvement descendant de la paroi intérieure du tambour (1, 1).

7. Dispositif selon l'une des revendications 1 à 6, **caractérisé en ce que** la paroi du tambour (1, 1') est imperméable à l'eau au moins sur une partie de son étendue axiale.

8. Dispositif selon l'une des revendications 1 à 7, **caractérisé en ce que** le tambour (1') est pourvu d'au moins un élément de tamisage (12') sur son pourtour.

9. Dispositif selon l'une des revendications 1 à 8, **caractérisé en ce que** le tambour (1') est pourvu, sur un disque (11) fermant son deuxième côté d'extrémité (5'), d'au moins un élément de tamisage (12").

10. Dispositif selon l'une des revendications 1 à 9, **caractérisé en ce que** la paroi du corps de refoulement (2) est pourvue d'au moins un élément de tamisage (12).
